(19) **Europäisches Patentamt / European Patent Office / Office européen des brevets**

(11) **EP 1 502 145 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(21) Anmeldenummer: **03724882.0**

(22) Anmeldetag: **02.05.2003**

(51) Int Cl.:
**G02B 27/01** (2006.01)

(86) Internationale Anmeldenummer:
**PCT/DE2003/001422**

(87) Internationale Veröffentlichungsnummer:
**WO 2003/102667 (11.12.2003 Gazette 2003/50)**

(54) **VERFAHREN UND VORRICHTUNG ZUR KONSISTENTEN DARSTELLUNG VON REALEN UND VIRTUELLEN OBJEKTEN**

METHOD AND DEVICE FOR THE CONSISTENT REPRESENTATION OF CONCRETE AND VIRTUAL OBJECTS

PROCEDE ET DISPOSITIF PERMETTANT DE REPRESENTER DES OBJETS REELS ET VIRTUELS DE MANIERE COHERENTE

(84) Benannte Vertragsstaaten:
**AT BE BG CH CY CZ DE DK EE ES FI FR GB GR HU IE IT LI LU MC NL PT RO SE SI SK TR**

(30) Priorität: **04.05.2002 US 377905 P**

(43) Veröffentlichungstag der Anmeldung:
**02.02.2005 Patentblatt 2005/05**

(73) Patentinhaber: **BAUHAUS-UNIVERSITÄT WEIMAR**
**99423 Weimar (DE)**

(72) Erfinder:
• **BIMBER, Oliver**
**99423 Weimar (DE)**
• **FROEHLICH, Bernd-Walter**
**30163 Hannover (DE)**
• **ESCARNACAO, L.-Miguel**
**Warwick, RI 02889 (US)**

(74) Vertreter: **Liedtke, Klaus**
**Liedtke & Partner**
**Patentanwälte**
**Postfach 10 19 16**
**99019 Erfurt (DE)**

(56) Entgegenhaltungen:
**EP-A- 0 537 945        EP-A- 0 977 071**
**EP-A- 1 128 317        US-B1- 6 361 507**

• **"DIRECTION SET (POWELL'S) METHODS IN MULTIDIMENSIONS" , NUMERICAL RECIPES IN C: THE ART OF SCIENTIFIC COMPUTING, XX, XX, PAGE(S) 412-420 XP008023515 in der Anmeldung erwähnt**

**Beschreibung**

Die Erfindung betrifft ein Verfahren und eine Vorrichtung zur konsistenten Darstellung von realen und virtuellen Objekten, bei dem mindestens einem Betrachter die überlagerte Darstellung eines realen und eines virtuellen Objektes dargeboten wird, wobei das reale Objekt beleuchtet wird, und Bilder des realen Objektes und des virtuellen Objektes optisch zusammengefügt werden.

Für vielfältige Anwendungen kann die Betrachtung realer Objekte wesentlich dadurch aufgewertet werden, dass diese Objekte durch zusätzliche virtuelle Darstellungen ergänzt wird.

Hierzu sind im Stand der Technik optische Anzeigegeräte bekannt, die mit Hilfe von teildurchlässigen Spiegeln einem Betrachter die Kombination der Betrachtungt eines realen Objektes und eines virtuellen Objektes präsentieren. Ein Beispiel hierfür ist die aus EP0977071 bekannt Vorrichtung. Das virtuelle Bild wird dabei dem Betrachter durch eine optische Abbildung dargeboten.

Wesentliche Probleme bei derartigen Präsentationen ergeben sich beim optischen Zusammenfügen der realen und virtuellen Bilder durch Überlagerungseffekte sowie für das Erreichen einer konsistenten Beleuchtung, insbesondere an den Überlappungsbereichen der beiden Objekte. Dies wird noch dadurch erschwert, dass der Beobachter seinen Standpunkt gegenüber den zu betrachtenden Objekten verändern kann, so dass er jeweils unterschiedliche Begrenzungen mit unterschiedlich beleuchteten Objektabschnitten sieht.

Der Erfindung liegt die Aufgabe zugrunde, ein Verfahren und eine Vorrichtung der eingangs genannten Art anzugeben, mit denen einem Beobachter auch für veränderliche Beobachtungsstandpunkte konsistente Überdeckungs- und beleuchtungseffekte dargeboten werden.

Die Aufgabe wird erfindungsgemäß mit einem Verfahren, welches die in die im Anspruch 1 angegebenen Merkmale aufweist, und mit einer Vorrichtung, welche die in die im Anspruch 10 angegebenen Merkmale aufweist, gelöst.

Vorteilhafte Ausgestaltungen sind in den Unteransprüchen angegeben.

Die Erfindung ermöglicht eine konsistente Überlagerung von realen und virtuellen Objekten, d. h. an der Übergangsstelle der dem Betrachter dargebotenen Bilder dieser beiden Objekte sind für den Betrachter keine Störungen erkennbar. Dies wird durch die Projektion eines Okklusionschattens auf reale, hinter dem virtuellen Objekt angeordnete Objekte erreicht, wobei die Schattenprojektion und die Ausleuchtung der Objekte mit Projektoren erfolgt. Die Projektion erfolgt dynamisch, so dass auch Änderungen des Betrachterstandpunktes berücksichtigt werden. Die Okklusionsschatten sind vom Betrachterstandpunkt abhängige Schatten, die eine realistische Abdeckung von realen Objekten durch virtuelle Objekte ermöglichen. Für den Betrachter sind sie nicht sichtbar.

Zur Projektion des Okklusionsschattens werden die inneren und äußeren Parameter der Lichtprojektoren als auch die Parameter der virtuellen und realen Objekte ermittelt. Zusätzlich dazu wird die Sicht des Betrachters ständig durch Verfolgung seiner Kopfbewegung gemessen.

Die Parameter der Lichtprojektoren werden einmalig bei der Justierung der Anordnung bestimmt. Die virtuellen Objekte können während der Betrachtung interaktiv manipuliert werden.

Aus diesen Daten wird eine Projektionsmatrix V berechnet, welche die Perspektive der jeweiligen Sicht des Betrachters erfasst und die Umwandlung der Objektansichten gemäß den aktuell bestehenden Bedingungen ermöglicht.

Zusätzlich dazu können konsistente und angepasste Schattierungseffekte auf realen Oberflächen erzeugt werden, indem eine virtuelle Beleuchtung durch die Projektion eines entsprechenden Strahlungsdichtebildes mit einem Lichtprojektor auf die realen Objekte erfolgt.

Die Erfindung zeichnet sich durch eine Reihe von Vorteilen aus. Hierzu zählen insbesondere:

1. Die erfindungsgemäße Anordnung ermöglicht eine realitätsgerechte Präsentation sowohl für einen als auch für mehrere Betrachter

2. Der Okklusionsschatten und die Beleuchtung werden dynamisch direkt auf den Oberflächen der realen Objekte erzeugt, sobald darauf Bilder überlagert werden.

3. Der Okklusionsschatten ist für den Betrachter nicht als solcher sichtbar.

4. Es können zusätzliche Phantomkörper dargestellt werden, die hinter ihnen angeordnete virtuelle Objekte abdecken. Die Kombination von Okklusionsschatten und Phantomkörper ist sowohl bei stationären Schaukästen als auch bei tragbaren Anzeigegeräten, die vom Betrachter ähnlich wie eine Brille am Kopf getragen werden, möglich.

5. Die Beleuchtung von realen und virtuellen Objekten einschließlich der zugehörigen Schatten und Schattierungen sind konsistent.

Die Erfindung wird im Folgenden anhand eines Ausführungsbeispieles näher erläutert. Das Ausführungsbeispiel erläutert die Anwendung der Erfindung an einem stationären Gerät, das als virtuelle Vitrine bezeichnet wird.

In der zugehörigen Zeichnung zeigen:

Figur 1    eine schematische Darstellung der Strahlengänge der virtuellen Vitrine,

Figur 2      eine schematische Darstellung der elektrischen Kopplungen,

und

Figur 3      den Algorithmus für die Bestimmung des Okklusionsschattens und der konsistenten Beleuchtung.

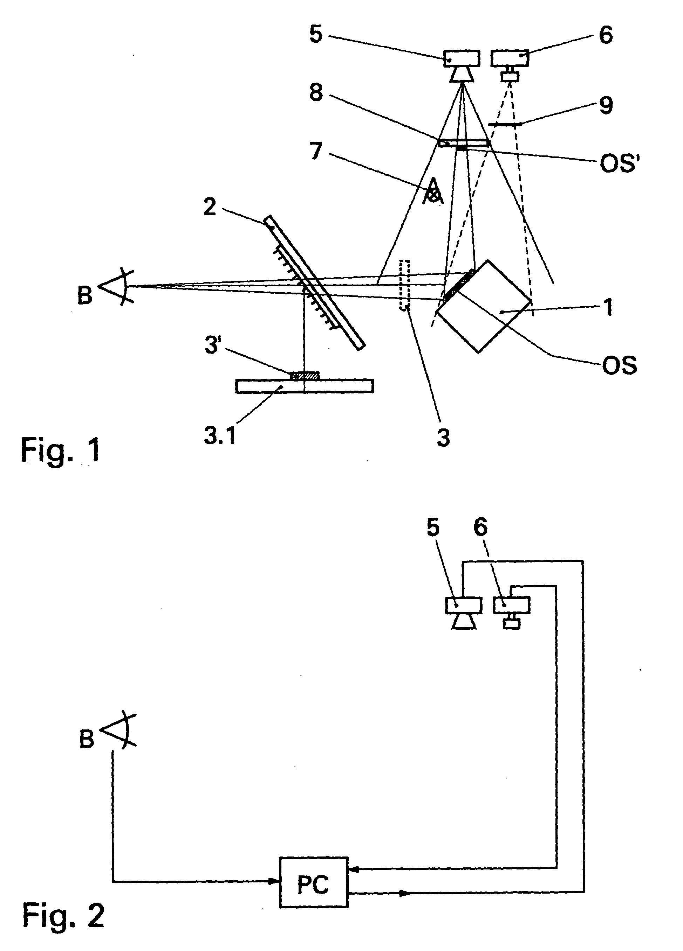

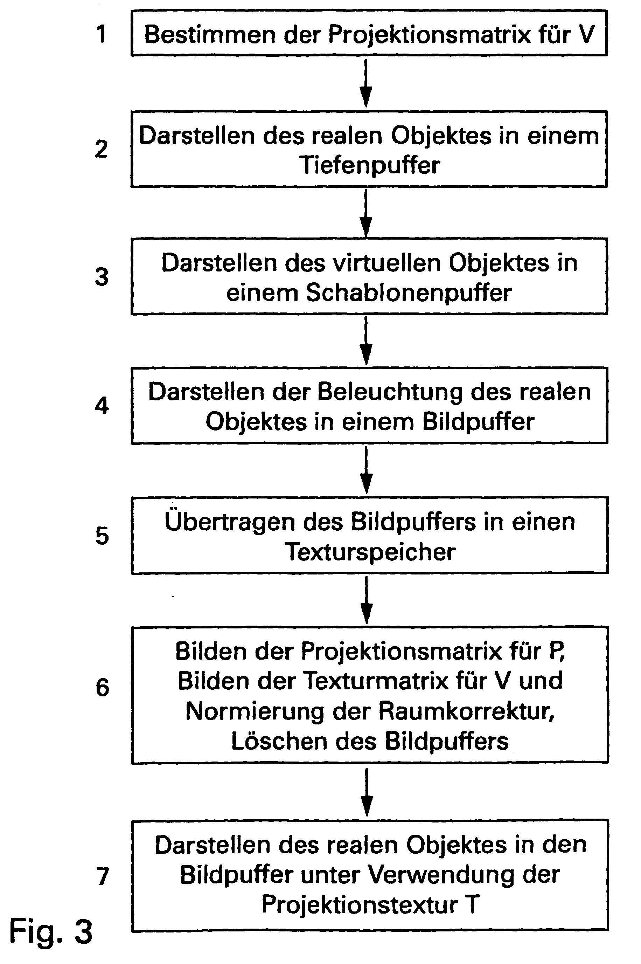

Die optischen Verhältnisse der vituellen Vitrine sind in Figur 1 dargestellt. Der Beobachter B betrachtet gleichzeitig das reale Objekt 1 und das virtuelle Objekt 3, dessen Abbildung 3' auf dem Monitor 3.1 dargestellt ist. Die von den beiden Objekten 1 und 3 ausgehenden Strahlengänge werden mit einem teildurchlässigen Spiegel 2 zusammengeführt.
Das reale Objekt 1 wird mit einem Lichtprojektor 5 beleuchtet. Die Ermittlung der Beleuchtungsverhältnisse kann mit der Kamera 6 erfolgen. Die Kamera 6 erfasst das Videobild 9 des realen Objektes 1. Mit dem Lichtprojektor 5 wird der Okkulionsschatten OS auf das reale Objekt 1 projiziert. Der Lichtprojektor 5 ist im Beispiel als Videoprojektor ausgeführt, dessen Bildpuffer 8 die Abbildung des Okklusionsschattens OS mit dem Strahlungsdichtebild L enthält.
Wie aus Figur 2 ersichtlich ist, erfolgt die Steuerung des Lichtprojektors 5 mit Hilfe des Computers PC. Dabei werden sowohl aktuelle Informationen zum Standpunkt des Beobachters B als auch zu der mit der Kamera 6 erfassten Beleuchtungssituaton berücksichtigt.
Vor der ersten Benutzung der virtuellen Vitrine muss zunächst der Lichtprojektor 5 justiert werden. Die Justierung des Lichtprojektors 5 erfolgt in folgender Weise:
Zunächst wird eine geometrische Darstellung der realen Szenerie aufgezeichnet. Dann werden zweidimensionale perspektivische Projektionen von ausgewählten Punkten auf der Oberfläche der realen dreidimensionalen Objekte 1 innerhalb des vom Lichtprojektor 5 erfassten Bildraumes 8 abgetastet. Die dreidimensional abgetasteten Bezugspunkte werden auf den Oberflächen der realen Objekte 1 markiert, indem sie mit der Anzeigeeinrichtung der virtuellen Vitrine wiedergegeben und überlagert werden. Hierzu müssen die realen Objekte 1 zuvor erfasst werden. Dann wird ein Fadenkreuz in das prozizierte Bild 8 des Lichtprojektors 5 abgebildet und zu den markierten Oberflächenpunkten ausgerichtet, um ihre zweidimensionalen Projektionen in den entsprechenden Bereichen des Bildschirmes zu bestimmen.
Der Nutzer wählt Abtastpunkte aus, die es ermöglichen, geeignete Justierbereiche festzulegen. Dies sollten gut sichtbare und nicht im Schatten liegenden Punkte sein. Die Punkte sollten auch nicht durch andere Flächen verdeckt sein. Nach dem Abgriff dieser Abtastpunkte werden sie als Eingabewerte für eine numerische Minimierung verwendet, mit der die inneren und äußeren Parameter berechnet werden. Im vorliegenden Fall sind innere Parameter das vertikale Sichtfeld und das Seitenverhältnis der Projektion, äußere Parameter sind die Stellung und die Richtung der optische Achse des Projektors Die Berechnung der Perspektive aus n Punkten kann nach der Powells Dirction Set-Methode erfolgen. Diese Methode ist beschrieben in Press et al: Numerical Recipes in C -The Art of Scientific Computing (2nd edition), Cambridge University Press, ISBN o-521-43108-5, pp. 412-420, 1992. Als Ergenbis erhält man die Matrix der Perspektivprojektion P, welche die Transformation des Modells bezogen auf den Ursprung der Szene beschreibt.
Werden mehrere Projektoren verwendet, dann muss die Justierung für jeden Projektor getrennt wiederholt werden.
Die Abbildung des Okklusionsschattens für einen einzelnen Betrachterstandpunkt erfolgt mit den in Figur 3 dargestellten Schritten: Zunächst müssen die Angaben zu den Einzelheiten sowohl der realen als auch der virtuellen Objekte bekannt sein. Danach wird eine Schattenmaske, die den Schattenriss des virtuellen Inhalts enthält, generiert. Dies erfolgt mit den fünf Schritten

1. Bestimmen der Projektionsmatrix V.
2. Darstellen des realen Objektes in einem Tiefenpuffer.
3. Darstellen des virtuellen Objektes in einem Schablonenpuffer.
4. Darstellen der Beleuchtung des realen Objektes in einem Bildpuffer.
5. Übertragung des Bildpuffers 8 in einen Texturspeicher.

Schritt 4 gibt die Beleuchtung des realen Inhalts in einem Bildpuffer wieder. Diese Ausleuchtung kann mit bekannten Modellen berechnet werden, um eine korrekte und angepasste Leuchtdichte auf den realen und virtuellen Oberflächen in Bezug auf die virtuellen Lichtquellen zu erzeugen. Es ist auch möglich, einfarbiges Licht vom Standpunkt des Lichtprojektors 5 auf reale Oberflächen zu projizieren, während virtuelle Objekte von den Positionen der virtuellen Lichtquellen beleuchtet werden.
Diese Schattenmaske wird anschließend auf die bekannte Geometrie des realen Objektes 1 abgebildet. Hierzu dienen die Schritte

6. Bilden der Projektionsmatrix P der Perspektivprojektion, Bilden der Teacturmatrix für V + Normieren der Raumkorrektur, Löschen des Bildpuffers.
7. Darstellen des realen Objektes 1 im Bildpuffer 8 unter Verwendung der Projektionstextur T.

Wenn die gleichen realen Objekte zur gleichen Zeit von mehreren Standpunkten (z.B. von verschiedenen Betrachtern aus) sichtbar sein sollen, sind die jeweiligen, auf diese Oberflächen projizierten Okklusionsschatten auch von mehreren Standpunkten gleichzeitig sichtbar. Dies führt zu störenden Effekten. Beispielsweise ist es bei zwei Betrachtern möglich, dass ein Betrachter B1 den Okklusionsschatten sieht, der für den Betrachter B2 erzeugt wurde und umgekehrt. Hinzu kommt, dass sich die Schatten bewegen, wenn die Betrachter B1 und/ oder B2 ihren Standort verändern.

Es bestehen zwei Möglichkeiten um diese Effekte zu vermindern.

1. Die von anderen Standpunkten aus erzeugten Okklusionsschatten sind harte Schatten, die durch die virtuelle Szene von einer Lichtquelle, die an den Betrachterstandpunkt positioniert ist, geworfen werden. Wird an jedem Betrachterstandpunkt eine virtuelle Lichtquelle angebracht, entstehen neben den berechneten Beleuchtungseffekten auf den Oberflächen der virtuellen Szenerie zusätzlich angepasste harte Schatten auf den Oberflächen der realen Szene.

2. Okklusionsschatten werden auf die realen Teilflächen projiziert, die ausschließlich von einem Blickpunkt aus sichtbar sind.

Eine vollständige und wirkungsvolle Lösung des Problems für beliebige Oberflächenarten gelingt durch die Auswertung der Oberflächenfarbe der realen Objekte. Dies erfolgt in folgender Weise:

Zusätzlich zur virtuellen Szene werden auch Teile der realen Szene, nämlich das erfasste Abbild ihrer Oberfläche, wiedergegeben, die durch die Okklusionsschatten sämtlicher Betrachter (bzw. Ansichten) optisch abgedeckt werden. Diese virtuelle Abbildung der Oberfläche wird unter den gleichen Beleuchtungsbedingungen dargestellt und schattiert wie das reale Gegenstück, damit fließende Übergänge zwischen den realen und virtuelle Teilen entstehen.

Zunächst werden die Okklusionsschatten sämtlicher anderen Betrachter in den Schablonenpuffer übertragen. Das geschieht durch Darstellen der Geometrie der realen Szene aus der Perspektive des Betrachters und durch die Zugabe von Okklusionsschatten durch die Projektion eines Texturabbildes. Das Auffüllen des Schablonenpuffers erfolgt so, dass das Umfeld der Okklusionsschatten im Endbild ausgeschnitten wird. Dann wird das Abbild der realen Oberfläche in den Bildpuffer eingelesen (ebenfalls aus der Perspektive des Betrachters) und mit der virtuellen Beleuchtungssituation schattiert. Nachdem die Schablonenfunktion abgeschaltet wird, können die virtuellen Objekte zur Ansicht des Betrachter hinzugefügt werden.

Um eine konsistente Beleuchtung zwischen realen und virtuellen Objekten zu erzeugen, werden folgende Schritte durchgeführt:

Zunächst wird das Bild $I_{rad1}$ wie folgt erzeugt: Sowohl die reale als auch die virtuelle Szene wird aus Sicht des Videoprojektors mit der virtuellen Beleuchtung erzeugt. Dieses Bild enthält sowohl Schatten und Schattierungen, die durch die virtuelle Beleuchtung erzeugt wurden.

Danach wird das zweite Bild $I_{rad2}$ wie folgt erzeugt: Die reale Szene wird aus der Sicht des Projektors mit einer virtuellen Punktlichtquelle von der Position des Projektors dargestellt. Dieses Bild enthält die physikalische Beleuchtung der realen Szene durch den Videoprojektor. Das Strahlungsdichtebild L ergibt sich als

$$L = I_{rad1} / I_{rad2}$$

Das Strahlungsdichtebild L wird mit dem Videoprojektor auf das reale Objekt projiziert.

Die Ermittlung der erforderlichen Schatteninformationen erfordert eine unterschiedliche Berücksichtigung verschiedenen Schattenarten. Es bestehen sechs Arten von Schatten in einer optisch durchsichtigen Umgebung. Dies sind:

1. Schatten auf realen Objekten, die durch reale Objekte und reale Lichtquellen entstehen,

2. Schatten auf virtuellen Objekten, die durch virtuelle Objekte und virtuelle Lichtquellen erzeugt werden,

3. Schatten auf virtuellen Objekten, die durch reale Objekte und virtuelle Lichtquellen erzeugt werden,

4. Schatten auf realen Objekten, die durch reale Objekte und virtuelle Lichtquellen erzeugt werden,

5. Schatten auf realen Objekten, die durch virtuelle Objekte und virtuelle Lichtquellen erzeugt werden und

**6. Okklusionsschatten.**

Die erste Schattenart ist das Ergebnis der Verdeckung und der Selbstverdeckung der physischen Umgebung, die durch eine reale Lichtquelle (im vorliegendem Fall Lichtprojektoren) beleuchtet wird. Damit die Steuerung der Beleuchtungsbedingungen im der gesamten Umgebung über simulierte virtuelle Lichtquellen konzentriert werden kann, müssen diese Schatten entfernt werden. Um dieses Ziel zu erreichen, werden im betrachteten Beispiel mehrere synchronisierte Lichtprojektoren verwendet, die alle sichtbaren realen Oberflächen beleuchten.

Die zweite und dritte Art von Schatten lässt sich mit einem standardisierten Verfahren zur Schattenabbildung bzw. Schattenpufferung erzeugen. Damit Schatten von realen Objekten auf virtuelle Objekte geworfen werden, muss die erfasste geometrische Darstellung der realen Objekte zusammen mit den virtuellen Objekten wiedergegeben werden, wenn das Schattenbild erzeugt wird. Derartige geometrische Darstellungen der realen Welt, die mitunter auch als Phantome bezeichnet werden, werden kontinuierlich wiedergegeben, um eine realistische Verdeckung der virtuellen Objekte zu erzeugen. Diese Verfahren erzeugen durch Hardwarebeschleunigung harte Schatten, während allgemeine Beleuchtungsverfahren weiche Schatten erzeugen können. Die Mischung mit Texturen ermöglicht es aber, den Schattenbereichen Umgebungslicht zuzugeben. Dadurch entstehen dunkle Schattenbereiche, die mit einer darunter liegenden Oberflächentextur vermischt werden, damit keine unrealistischen schwarzen Schatten erzeugt werden.

Die Schattenarten 4 und 5 können auch über ein Schattenbild erzeugt werden. Sie werden aber zusammen mit dem Strahlendichtebild L auf die Oberfläche des realen Objekts projiziert.

Deshalb muss I $_{rad1}$ die schwarzen (nicht beigemischten) Schatten der virtuellen Objekte und der realen Phantome enthalten. Dies kann durch die Wiedergabe sämtlicher virtueller Objekte und sämtlicher Phantome beim ersten Schattendurchlauf erreicht werden, um damit ein Schattenbild zu erzeugen.

Beim zweiten Durchlauf wird dieses Schattenbild auf das wiedergegebene und schattierte Abbild des Reflexionsvermögens angewendet, d.h. die Reflexionstextur und die Schattentextur werden auf der geometrischen Darstellung der realen Objekte abgebildet. Die Division der Bereiche des schwarzen Schattens durch I$_{rad2}$ ergibt die Schattenbereiche.

Wie oben bereits ausgeführt, sind Okklusionsschatten besondere vom Betrachterstandpunkt abhängige Schatten, die mit Lichtprojektoren auf der Oberfläche der realen Umgebung erzeugt werden. Mit ihnen soll eine realistische Abdeckung von realen Objekten durch virtuelle Objekte ermöglicht werden. Aus der Sicht des Betrachters sind sie nicht sichtbar, da sie genau unter den grafischen Überlagerungen erzeugt werden. Bevor die Projektion erfolgt, werden dem Leuchtdichtebild L Abbildungen der Okklusionsschatten über die Farbmischung beigegeben.

## BEZUGSZEICHENLISTE

| | |
|---|---|
| V | Projektionsmatrix der Perspektive aus der jeweiligen Sicht des Betrachters |
| P | Matrix der Perspektivprojektion |
| L | Strahlungsdichtebild |
| T | Texturspeicher |
| B | Betrachter |
| PC | Computer |
| OS | Okklusionsschatten |
| OS' | Bild des Okklusionsschattens |
| 1 | reales Objekt |
| 2 | teildurchlässiger Spiegel |
| 3 | virtuelles Objekt |
| 3' | Abbildung des virtuellen Objektes |
| 3.1 | Bildpuffer des Monitors |
| 4 | Videoprojektor |
| 5 | Lichtprojektor |
| 6 | Kamera |
| 7 | virtuelle Lichtquelle |
| 8 | Bildpuffer des Videoprojektors |
| 9 | Videobild der realen Objekte. |

## Patentansprüche

1.  Verfahren zur konsistenten Darstellung von realen (1) und virtuellen (3) Objekten, bei dem mindestens einem Betrachter (B) die überlagerte Darstellung eines realen (1) und eines virtuellen (3) Objektes dargeboten wird, wobei das reale Objekt (1) beleuchtet wird, und Bilder des realen Objektes (1) und des virtuellen Objektes (3) mit Hilfe eines teildurchlässigen optischen Elements optisch zusammengefügt werden, **dadurch gekennzeichnet, dass** die Beleuchtung des realen Objektes (1) mit einem Lichtprojektor (5) erfolgt, der auf dem realen Objekt (1) einen dynamischen Schatten und/oder Schattierungen erzeugt, sobald auf diesem Bilder des virtuellen Objektes (3) abgebildet werden; wobei der Schatten aus der Sicht des Betrachters von einer Projektion des virtuellen Objektes (3) überlagert wird und somit für den Betrachter (B) nicht sichtbar ist.

2.  Verfahren nach Anspruch 1, **dadurch gekennzeichnet, dass** vor der ersten Benutzung eine Justierung des Lichtprojektors (5) erfolgt und dass die Position des Beobachters (B) durch Messen seiner Kopfbewegung ständig erfasst wird und in die Berechnung des vom Lichtprojektor (5) abgestrahlten Bildes einbezogen wird.

3.  Verfahren nach Anspruch 2, **dadurch gekennzeichnet, dass** zur Justierung des Lichtprojektors (5) zunächst die reale Szene aufgezeichnet wird und danach zweidimensionale perspektivische Projektionen von ausgewählten Punkten auf der Oberfläche der realen Objekte (1) abgetastet werden, danach ein Fadenkreuz in das projizierte Bild (8) des Lichtprojektors (5) abgebildet und zu den markierten Oberflächenpunkten ausgerichtet wird und daraus Eingabewerte für eine numerische Minimierung ermittelt werden, deren Ergebnis in einer Matrix der Perspektivprojektion (P) zusammengefasst werden.

4.  Verfahren nach einem der vorhergehenden Ansprüche, **dadurch gekennzeichnet, dass** die Beleuchtung der realen Objekte (1) mit mehreren Lichtprojektoren (5) erfolgt.

5.  Verfahren nach einem der vorhergehenden Ansprüche, **dadurch gekennzeichnet, dass** die Beleuchtungssituation mit mindestens einer zusätzlich zum Lichtprojektor (5) angebrachten Kamera (6) ermittelt wird und die Ergebnisse in die Berechnung der Schatten und/oder Schattierungen einbezogen werden.

6. Verfahren nach einem der vorhergehenden Ansprüche, **dadurch gekennzeichnet, dass** die Ermittlung des Schattens in folgenden Schritten erfolgt:

    1. Bestimmen der Projektionsmatrix (V).
    2. Darstellen des realen Objektes (1) in einen Tiefenpuffer.
    3. Darstellen des virtuellen Objektes (3) in einen Schablonenpuffer.
    4. Darstellen der Beleuchtung des realen Objektes (1) in einem Bildpuffer.
    5. Übertagung des Bildpuffers in einen Texturspeicher (T).
    6. Bilden der Projektionsmatrix (P), Bilden der Texturmatrix für V + Normieren der Raumkorrektur, Löschen des Bildpuffers.
    7. Darstellen des realen Objektes in den Bildpuffer unter Verwendung der Projektionstextur T.

7. Verfahren nach einem der vorhergehenden Ansprüche, **dadurch gekennzeichnet, dass** zusätzlich eine Auswertung der Oberflächenfarbe der realen Objekte (1) erfolgt und deren Ergebnisse in die Berechnung des Okklusionsschattens (OS) einbezogen wird.

8. Verfahren nach Anspruch 7, **dadurch gekennzeichnet, dass** ein Abbild der Oberfläche der realen Szene erfasst wird, die durch die von sämtlichen Betrachters sichtbaren Okklusionsschatten (OS) abgedeckt werden und diese unter den gleichen Beleuchtungsbedingungen dargestellt und schattiert werden wie das reale Gegenstück.

9. Verfahren nach Anspruch 8, **dadurch gekennzeichnet, dass** die Okklusionsschatten (OS) sämtlicher anderer Betrachter in einen Schablonenpuffer übertragen werden, wobei das Umfeld der Okklusionsschatten (OS) im Endbild ausgeschnitten wird, dann wird das Abbild der realen Oberfläche in einen Bildpuffer eingelesen und mit der virtuellen Beleuchtungssituation schattiert wird und schließlich nach dem Abschalten der Schablonenfunktion die virtuellen Objekte (3) zur Ansicht des Betrachter hinzugefügt werden.

10. Vorrichtung zur gleichzeitigen Darstellung von realen (1) und virtuellen (3) Objekten, insbesondere zur Durchführung des Verfahrens nach einem der Ansprüche 1 bis 9, mit einer Beleuchtungseinrichtung für das reale Objekt (1), einer Projektionseinrichtung zur Abbildung des virtuellen Objektes und einem teildurchlässigen optischen Bauteil (2), mit dem die vom realen Objekt (1) und die vom virtuellen Objekt (3) ausgehenden Lichtstahlen zusammengefügt werden, **dadurch gekennzeichnet, dass** die Beleuchtung mit einem Lichtprojektor (5) erfolgt, der mindestens im Berührungsbereich der beiden Objekte (1, 3) Schatten und/oder Schattierungen erzeugt, welche der Kontur der virtuellen Objekte (3) entsprechen.

11. Vorrichtung nach Anspruch 10, **dadurch gekennzeichnet, dass** als Lichtprojektor (5) ein Videoprojektor verwendet wird.

12. Vorrichtung nach Anspruch 10 oder 11, **dadurch gekennzeichnet, dass** der Lichtprojektor (5) mit einem Rechner (PC) gekoppelt ist, der Informationen über die Position eines Betrachters (B) verarbeitet.

13. Vorrichtung nach einem der Ansprüche 10 bis 12, **dadurch gekennzeichnet, dass** der Lichtprojektor (5) mit einer Videokamera (6) gekoppelt ist, welche die Beleuchtung und Schattenbildung des realen Objektes (1) erfasst und dem Computer (PC) zuführt, von dem dann Schattenbilder berechnet und generiert werden, die der Lichtprojektor (5) auf das reale Objekt (1) abbildet.

## Claims

1. A method for the consistent presentation of real (1) and virtual (3) objects, in which the superposed presentation of a real (1) and a virtual (3) object is presented to at least one observer (B), wherein the real object (1) is illuminated and images of the real object (1) and the virtual object (3) are optically merged by means of a semitransparent optical element, **characterised in, that** the illumination of the real object (1) is done by a light projector (5) generating a dynamic shadow and/or shading on the real object as soon as images of the virtual object (3) are projected thereon and from the observers (B) point of view the shadow is superposed by a projection of the virtual object (3) and thus not visible for the observer (B).

2. The method according to claim 1, **characterised in, that** before the first use an adjustment of the light projector (5) is carried out and the observers (B) position is permanently registered by measuring his heads movement and that position is taken into account when calculating the image projected by the light projector (5).

3. The method according to claim 2, **characterised in, that** for adjusting the light projector (5) at first the real scene is recorded and thereafter two-dimensional perspective projections of selected surface points of the real objects (1) are sampled, then cross hairs are mapped into the image (8) projected by the light projector (5) and aligned relative to the selected surface points and thereof input values are calculated for a numerical minimisation, whose result is merged in a matrix of the perspective projection (P).

4. The method according to one of the preceding claims, **characterised in, that** the illumination of the real objects (1) is carried out with more than one light projector (5).

5. The method according to one of the preceding claims, **characterised in, that** the illumination situation is determined by means of at least one camera (6) attached in addition to the light projector (5) and the results are taken into account in the calculation of the shadows and/or shadings.

6. The method according to one of the preceding claims, **characterised in, that** the determination of the shadow is carried out in accordance with the following steps:

   1. determining the projection matrix (V).
   2. mapping the real object (1) into a depth buffer.
   3. mapping the virtual object (3) into a stencil buffer.
   4. rendering the real object (1) into a frame buffer.
   5. transferring the frame buffer into a texture memory (T).
   6. creating the projection matrix (P), creating the texture matrix for V + normalising the spatial correction, deleting the frame buffer.
   7. rendering the real object (1) into the frame buffer using the projection texture (T).

7. The method according to one of the preceding claims, **characterised in, that** an analysis of the surface color of the real objects (1) is carried out additionally and its results are taken into account when calculating the occlusion shadow (OS).

8. The method according to claim 7, **characterised in, that** an image of the real scenes surface is acquired which is masked by the occlusion shadows (OS) visible for all observers (B) and this image is rendered and shaded under the same illumination conditions as the real analogue.

9. The method according to claim 8, **characterised in, that** the occlusion shadows (OS) of all other observers (B) are transferred to a stencil buffer, wherein the surroundings of the occlusion shadows (OS) are cut out in the final image, then the image of the real surface is read into a frame buffer and shaded with the virtual illumination situation and finally this image is added to the observers (B) view after disabling the stencilling of the virtual objects (3).

10. Arrangement for the synchronous rendering of real (1) and virtual (3) objects, particularly for the implementation of the method according to one of the claims 1 to 9, with a illumination facility for the real object (1), a projection facility for projecting the virtual object and a semitransparent optical component (2), which merges the light beams emitted by the real object (1) and the virtual object (3), **characterised in, that** the illumination is carried out by a light projector (5), that creates shadows and/or shadings at least in the contact area of both objects (1, 3), which correspond to the outline of the virtual object (3).

11. Arrangement according to claim 10, **characterised in, that** the light projector (5) is a video projector.

12. Arrangement according to claim 10 or 11, **characterised in, that** the light projector (5) is connected to a computer (PC), which processes the information about the position of an observer (B).

13. Arrangement according to one of the claims 10 to 12, **characterised in, that** the light projector (5) is connected to a video camera (6), which acquires the illumination and formation of shades of the real object (1) and feeds them to the computer (PC), which then calculates and generates the shadow image, that are projected onto the real object (1) by the light projector (5).

**Revendications**

1. Procédé pour la représentation consistante d'objets réels (1) et virtuels (3), où la représentation en superposition d'un objet réel (1) et d'un objet virtuel (3) est soumise à un observateur (B) au moins, l'objet réel (1) étant éclairé, et des images de l'objet réel (1) et de l'objet virtuel (3) étant optiquement assemblées au moyen d'un élément optique partiellement transparent, **caractérisé en ce que** l'éclairage de l'objet réel (1) est réalisé par un projecteur lumineux (5) générant une ombre dynamique et/ou des nuances d'ombre sur l'objet réel (1) dès que des images de l'objet virtuel (3) sont représentées sur celui-ci, une projection de l'objet virtuel (3) se superposant à l'ombre pour la vue de l'observateur, celle-ci restant ainsi invisible pour l'observateur (B).

2. Procédé selon la revendication 1, **caractérisé en ce qu'**un réglage du projecteur lumineux (5) est exécuté avant la première utilisation, et **en ce que** la position de l'observateur (B) est continûment saisie par mesure de ses mouvements de tête, et intégrée au calcul de l'image diffusée par le projecteur lumineux (5).

**3.** Procédé selon la revendication 2, **caractérisé en ce que**, pour le réglage du projecteur lumineux (5), la scène réelle est enregistrée avant que des projections en perspective bidimensionnelle de points sélectionnés à la surface des objets réels (1) soient explorées, un réticule étant ensuite représenté dans l'image projetée (8) par le projecteur lumineux (5) et dirigé vers les points de surface marqués, des valeurs d'entrée pour une minimisation numérique étant alors déterminées, dont les résultats sont regroupés dans une matrice de la projection en perspective (P).

**4.** Procédé selon l'une des revendications précédentes, **caractérisé en ce que** l'éclairage des objets réels (1) est réalisé par plusieurs projecteurs lumineux (5).

**5.** Procédé selon l'une des revendications précédentes, **caractérisé en ce que** l'état d'éclairage est saisi par au moins une caméra (6) disposée en complément du projecteur lumineux (5), et **en ce que** les résultats sont intégrés au calcul des ombres et/ou des nuances d'ombre.

**6.** Procédé selon l'une des revendications précédentes, **caractérisé en ce que** l'ombre est déterminée avec les étapes suivantes :

1. Détermination de la matrice de projection (V).
2. Représentation de l'objet réel (1) dans un tampon de profondeur.
3. Représentation de l'objet virtuel (3) dans un tampon de gabarit.
4. Représentation de l'éclairage de l'objet réel (1) dans un tampon d'image.
5. Transmission du tampon d'image vers une mémoire de texture (T).
6. Formation de la matrice de projection (P), formation de la matrice de texture pour V + normalisation de la correction spatiale, effacement du tampon d'image.
7. Représentation de l'objet dans la tampon d'image en recourant à la texture de projection T.

**7.** Procédé selon l'une des revendications précédentes, **caractérisé en ce qu'**une évaluation de la couleur de surface des objets réels (1) est additionnellement exécutée, dont les résultats sont intégrés au calcul de l'ombre d'occlusion (OS).

**8.** Procédé selon l'une des revendications précédentes, **caractérisé en ce qu'**une représentation de la surface de la scène réelle est saisie, recouverte par les ombres d'occlusion (OS) visibles pour tous les observateurs (B), et **en ce que** celles-ci sont représentées et ombrées dans les mêmes conditions que l'objet réel.

**9.** Procédé selon la revendication 8, **caractérisé en ce que** les ombres d'occlusion (OS) sont transmises à tous les autres observateurs dans un tampon de gabarit, l'environnement des ombres d'occlusion (OS) étant coupé dans l'image finale, **en ce que** la représentation de la surface réelle est ensuite lue dans un tampon d'image et ombrée avec l'état d'éclairage virtuel, et **en ce que** les objets virtuels (3) sont finalement ajoutés pour examen de l'observateur après désactivation de la fonction de gabarit.

**10.** Dispositif pour la représentation simultanée d'objets réels (1) et virtuels (3), en particulier pour l'exécution du procédé selon l'une des revendications 1 à 9, avec un équipement d'éclairage pour l'objet réel (1), un équipement de projection pour la représentation de l'objet virtuel et un composant optique (2) partiellement transparent au moyen duquel les rayons lumineux partant de l'objet réel (1) et de l'objet virtuel (3) sont assemblés, **caractérisé en ce que** l'éclairage est exécuté par un projecteur lumineux (5) générant des ombres et/ou des nuances d'ombre au moins dans la zone de contact des deux objets (1, 3), lesquelles correspondent au contour des objets virtuels (3).

**11.** Dispositif selon la revendication 10, **caractérisé en ce qu'**un projecteur vidéo est utilisé comme projecteur lumineux (5).

**12.** Dispositif selon la revendication 10 ou 11, **caractérisé en ce que** le projecteur lumineux (5) est couplé à un ordinateur (PC) traitant des informations sur la position d'un observateur (B).

**13.** Dispositif selon l'une des revendications 10 à 12, **caractérisé en ce que** le projecteur lumineux (5) est couplé à une caméra vidéo (6) saisissant l'éclairage et l'ombrage de l'objet réel (1) et transmettant ceux-ci à l'ordinateur (PC), à partir duquel des images d'ombres sont ensuite calculées et générées, que le projecteur lumineux (5) représente sur l'objet réel (1).

Fig. 1

Fig. 2

1 | Bestimmen der Projektionsmatrix für V

2 | Darstellen des realen Objektes in einem Tiefenpuffer

3 | Darstellen des virtuellen Objektes in einem Schablonenpuffer

4 | Darstellen der Beleuchtung des realen Objektes in einem Bildpuffer

5 | Übertragen des Bildpuffers in einen Texturspeicher

6 | Bilden der Projektionsmatrix für P, Bilden der Texturmatrix für V und Normierung der Raumkorrektur, Löschen des Bildpuffers

7 | Darstellen des realen Objektes in den Bildpuffer unter Verwendung der Projektionstextur T

Fig. 3